# EUROPEAN PATENT SPECIFICATION

(11) **EP 3 574 767 B1**
(45) Date of publication and mention of the grant of the patent: **18.02.2026**
(21) Application number: 17894178.7
(22) Date of filing: 06.11.2017
(51) Int. Cl.: A23L 2/00, C12C 5/02, C12G 3/04, A23L 2/60, A23L 2/54, A23L 2/52, C12G 3/05, C12G 3/06

(54) **BEER-LIKE EFFERVESCENT BEVERAGE**
BIERÄHNLICHES BRAUSEGETRÄNK
BOISSON EFFERVESCENTE DE TYPE BIÈRE

(30) Priority: 30.01.2017 JP 2017014011
(43) Date of publication of application: 04.12.2019
(73) Proprietor: Asahi Group Holdings, Ltd., Tokyo 130-8602 (JP); Asahi Breweries, Ltd., Tokyo 130-8602 (JP)
(72) Inventor: SUYAMA, Tomoya, Moriya-shi Ibaraki 302-0106 (JP); ITO, Shinsuke, Moriya-shi Ibaraki 302-0106 (JP); NISHIZUKA, Taichi, Moriya-shi Ibaraki 302-0106 (JP)
(74) Representative: Ernest Gutmann - Yves Plasseraud S.A.S.
(86) International application number: PCT/JP2017/039898
(87) International publication number: WO 2018/138998

(56) References cited:
- WO-A1-2016/006340
- WO-A1-2016/199531
- JP-A- 2016 082 897
- JP-A- 2016 136 881
- JP-A- 2017 000 038
- US-A1- 2014 080 923

## Description

### TECHNICAL FIELD

The present invention relates to a beer-like effervescent beverage having a reduced carbohydrate content, well-balanced taste and excellent beer-likeness.

Priority is claimed on Japanese Patent Application No. 2017-014011, filed January 30, 2017

### BACKGROUND ART

Regarding beer or beer-like effervescent beverages such as sparking sake, a wide variety of products have been marketed due to the diversification of consumer preferences. In particular, the demand for low-calorie and low-carbohydrate beer-like effervescent beverages is increasing in recent years due to the health-consciousness of consumers in recent years. For example, beer contains various components that have not yet been analyzed, including alcohols produced by yeast fermentation, and is known to be a well-balanced and thirst-quenching drink that has drink fulfillment as well as substantiality in aftertaste. However, beer has a high calorie and carbohydrate content. On the other hand, unfermented beer-like effervescent beverages manufactured without undergoing a fermentation process have a simpler composition than fermented beer-like effervescent beverages, and although they tend to have a drink-fulfillment, they are easier to control in terms of the calorie and carbohydrate content. Therefore, for example, low-carbohydrate and low-calorie unfermented beer-like effervescent beverages can be relatively easily manufactured by using low-carbohydrate and low-calorie raw materials such as high-intensity sweeteners instead of sucrose and water-soluble dietary fibers.

Such high-intensity sweeteners include artificial sweeteners such as aspartame, sucralose, acesulfame potassium, saccharin or the like, and natural sweeteners such as stevia extract, licorice extract, locust bean extract, thaumatin, erythritol or the like. Artificial sweeteners such as aspartame or the like are widely used in beverages because their sweetness quality is closer to sucrose. However, many high-intensity sweeteners still have different sweetness qualities from sucrose, such as having a strong lingering sweetness or having a bitterness or astringent taste. Several methods are known to improve the sweetness quality of the high-intensity sweeteners. For example, Patent Document 1 describes that addition of an acid taste-imparting substance and a bitter taste-imparting substance to a beverage containing acesulfame potassium and sucralose can improve the lingering sweetness of acesulfame potassium or the like.

Examples of the water-soluble dietary fibers to be added to the beverages include indigestible dextrin, polydextrose, soybean dietary fiber and the like. In addition, in some cases, the water-soluble dietary fiber has an effect other than increasing the extract content of the beverage to enhance the taste-richness. For example, Patent Document 2 describes that by adding a water-soluble dietary fiber to a food and drink containing sodium salt, it is possible to enhance saltiness or mask the disagreeable taste (acrid taste) caused by potassium salt and the like. In addition, Patent Document 3 describes that the foam is stabilized by blending an indigestible dextrin with a carbonated beverage containing a high-intensity sweetener. Further, in particular, indigestible dextrin is known to have a function such as sugar absorption rate-suppressing function and intestine-regulation function, and is preferably used for beverages intended for health-conscious consumers.

### PRIOR ART LITERATURE

### Patent Documents

Patent document 1: Japanese Unexamined Patent Application, First Publication No. 2016-127855
Patent document 2: PCT International Publication No. WO 2012/017710
Patent document 3: Japanese Unexamined Patent Application, First Publication No. 2015-43765

### DISCLOSURE OF INVENTION

### Problems to be Solved by the Invention

An objective of the present invention is to provide a beer-like effervescent beverage having a reduced carbohydrate content, well-balanced taste and excellent beer-likeness. Means for Solving the Problems

As a result of intensive studies to solve the above-mentioned problems, the present inventors have discovered that a beer-like effervescent beverage having a reduced carbohydrate content, excellent beer-likeness and well-balanced taste can be obtained by using as a high-intensity sweetener a stevia extract or its enzyme-treated product in combination with a polydextrose, and thus have completed the present invention.

The beer-like effervescent beverage of the present invention has the following features [1] to [4].
[1] A beer-like effervescent beverage, including 10 to 80 mg/L of a steviol glycoside and 4 to 40 g/L of a polydextrose.
[2] The beer-like effervescent beverage according to [1], wherein the beer-like effervescent beverage is a non-fermented beverage.
[3] The beer-like effervescent beverage according to any one of [1] to [2], wherein the steviol glycoside is at least one selected from the group consisting of a stevioside, a rebaudioside A, and a glycosyltransferase-treated product thereof.
[4] The beer-like effervescent beverage according to any one of [1] to [3], wherein an alcohol content is less than 1.0%.

### Effects of the Invention

According to the present invention, a beer-like effervescent beverage having a reduced carbohydrate content, well-balanced taste, and excellent beer-likeness in which astringent taste and sweet taste are well balanced can be provided.

### BEST MODE FOR CARRYING OUT THE INVENTION

The beer-like effervescent beverage, comprising 10 to 80 mg/L of a steviol glycoside and 4 to 40 g/L of a polydextrose according to the present invention and in this description refers to an effervescent beverage having a beer-likeness (a taste reminiscent of beer in flavor and taste). The alcohol concentration of the beer-like effervescent beverage of the present invention is not limited, and the beer-like effervescent beverage may be an alcoholic beverage containing 1.0% by volume or more of alcohol, or a so-called non-alcoholic beverage containing less than 1.0% by volume of alcohol. In addition, the beer-like effervescent beverage of the present invention may be a fermented beer-like effervescent beverage manufactured through a fermentation process in which a fermentation raw material is fermented by yeast, or a non-fermented beer manufactured without a fermentation process. Specifically, examples of the beer-like effervescent beverage include beer, sparking sake, non-alcohol beer and the like. In addition, it may be a liqueur obtained by mixing a beverage manufactured through a fermentation process with an alcohol-containing distillate. However, in terms of flavor balance, the beer-like effervescent beverage is preferably a non-fermented beverage.

The beer-like effervescent beverage according to the present invention contains a steviol glycoside as a sweetener. Steviol glycoside (glycoside having a steviol skeleton) is a natural high-intensity sweetener derived from the leaves of stevia (stevia rebaudiana BERTONI), and by blending an appropriate amount of it, the taste-richness of the beer-like effervescent beverage can be enhanced and the drink fulfillment of the beer-like effervescent beverage can be improved as in the case of blending other high-intensity sweeteners.

Because the steviol glycoside has a unique astringent taste, in general, when the steviol glycoside is added to a beverage as a substitute for sucrose, the astringency tends to be a disagreeable taste of the beverage. Furthermore, the sweetness of the steviol glycoside has a strong aftertaste, and the difference in sweetness quality from the sucrose is also somewhat problematic as a substitute for sucrose. However, in the case of a beer-like effervescent beverage, this astringent taste unique to the steviol glycoside improves the beer-like bitterness and astringent taste mainly derived from hops. In addition, since the sweetness attributed to the steviol glycoside is felt at the same time as the hop bitterness is felt, unnatural sweetness is less likely to impair the beer-like taste, but rather increases the complexity of the tastes, thereby enhancing the taste-richness and improving the drink fulfillment. Therefore, by blending the steviol glycoside, the beer-like effervescent beverage according to the present invention has a balance between sweetness and bitterness and also has a more excellent beer-like taste than a beverage using sucrose or other high-intensity sweeteners.

The steviol glycoside contained in the beer-like effervescent beverage of the present invention is not particularly limited as long as it is a sweet substance having a steviol skeleton, and may be a natural steviol glycoside itself contained in the leaves of stevia, or a steviol glycoside obtained by subjecting the natural steviol glycoside to glycosyl transfer of glucose or fructose by a glycosyltransferase. Examples of the steviol glycoside include stevioside, rebaudioside A, rebaudioside C, and dulcoside A. The steviol glycoside contained in the beer-like effervescent beverage of the present invention may be used alone or in combination of two or more.

A non-fermented beer-like effervescent beverage containing steviol glycoside can be manufactured, for example, by using a stevia extract containing a steviol glycoside, a stevia powder, or a steviol glycoside purified therefrom. Examples of the stevia extract include not only the extract itself extracted from the stevia leaves with a suitable extraction solvent, but also include the crude product and generated product of the extract. The beer-like effervescent beverage of the present invention can also be manufactured by using a stevia extract, a stevia powder, or a stevia glycoside purified therefrom and treated with glycosyltransferase (hereafter, may be referred to as "enzyme-treated stevia") as a raw material.

The steviol glycoside contained in the beer-like effervescent beverage according to the present invention is preferably at least one selected from the group consisting of a stevioside, a rebaudioside A, and a glycosyltransferase-treated product thereof, more preferably at least one selected from the group consisting of a stevioside and a glycosyltransferase-treated product thereof, and even more preferably a glycosyltransferase-treated product of a stevioside.

The content of the steviol glycoside in the beverage can be determined, for example, from a peak area of a chromatograph obtained by HPLC (high-performance liquid chromatography) analysis. In the quantitative method using a peak area, an area percentage method may be used, or a ratio to the peak area of a standard with a known concentration may be used to determine the content.

The content of the steviol glycoside in the beer-like effervescent beverage according to the present invention is between 10 to 80 mg/L for the beverage to impart a sufficient drink fulfillment and a beer-like astringency, and the sweetness attributed to the steviol glycoside is not felt as a disagreeable taste of the beer-like effervescent beverage. The content of the steviol glycoside may be determined appropriately in consideration of the intended product quality and the like. The content of the steviol glycoside in the beer-like effervescent beverage according to the present invention is preferably 10 to 80 mg/L, more preferably 20 to 80 mg/L, even more preferably 20 to 50 mg/L, and even more preferably 20 to 40 mg/L.

The content of the steviol glycoside in the beer-like effervescent beverage according to the present invention can be determined based on a sucrose-converted content. For example, the content of the steviol glycoside is preferably such that the sucrose-converted content of the beverage is 1 to 15 g/L, and more preferably 2.5 to 12 g/L, and even more preferably 3 to 7 g/L.

The "sucrose-converted content of the high-intensity sweetener" refers to an amount obtained by multiplying the high-intensity sweetener content by the sweetness degree. For example, when the content of an enzyme-treated stevia having a sweetness degree of 180 is 28 mg/L, the sucrose-converted content is 5 g/L.

The beer-like effervescent beverage according to the present invention contains a polydextrose as a water-soluble dietary fiber in addition to the steviol glycoside. By particularly using the polydextrose as a water-soluble dietary fiber, the astringency and sweetness of the steviol glycoside can be coordinated, thereby making it possible to further improve the beer-like astringency and taste-richness.

The content of the polydextrose in the beer-like effervescent beverage according to the present invention is between 4 to 40 g/L as long as the sweetness and the astringency attributed to steviol glycoside can be collectively improved to a milder taste. The content of the polydextrose can be appropriately determined in consideration of the amount of the steviol glycoside to be blended, the intended product quality and the like. The content of the polydextrose in the beer-like effervescent beverage according to the present invention is preferably 4 to 40 g/L, more preferably 4 to 30 g/L, even more preferably 4.5 to 25 g/L, and even more preferably 6 to 20 g/L.

The beer-like effervescent beverage according to the present invention achieves beer-like drink fulfillment using a steviol glycoside as a sweetener, without using sucrose. The carbohydrate concentration of the beer-like effervescent beverage is preferably less than 2.0 g/100 mL, more preferably less than 0.9 g/100 mL, and even more preferably less than 0.5 g/100 mL. The carbohydrate concentration of the beer-like effervescent beverage according to the present invention can be controlled, for example, by using raw materials only having a relatively low carbohydrate content.

In the beer-like effervescent beverage, the concentration of purine is preferably low in order to meet the health-consciousness of the consumer. The purine concentration of the beer-like effervescent beverage is preferably less than 0.2 mg/100 mL, more preferably 0.1 mg/100 mL or less, and even more preferably less than 0.08 mg/100 mL.

In the present description, purine refers to a total amount of four purine bases of adenine, xanthine, guanine and hypoxanthine. The purine content in the beer-like effervescent beverage and the raw material can be measured, for example, by a detection method using LC-MS/MS after hydrolysis with perchloric acid ("Guidance of microanalysis of purine in alcoholic beverages", Japan Food Research Laboratories, Internet <URL: http://www.jfrl.or.jp/item/nutrition/post-31.html>, searched on January, 2013).

The beer-like effervescent beverage according to the present invention is preferably a beverage containing only a steviol glycoside as a sweetener, but also it is allowable to contain sweeteners other than the steviol glycoside as long as the effects of the present invention are not impaired. The sweeteners other than the steviol glycoside may be sugars, sweeteners having relatively low sweetness, or high-intensity sweeteners. Specifically, examples of the sweeteners having relatively low sweetness include polysaccharides and sweet amino acids. The polysaccharide refers to a carbohydrate in which three or more monosaccharides are polymerized. The polysaccharides are roughly classified into starch, dextrin and oligosaccharides mainly according to their size. The oligosaccharide refers to a carbohydrate obtained by polymerizing about 3 to 10 monosaccharides, and the dextrin refers to a carbohydrate obtained by hydrolyzing starch, which is larger than the oligosaccharide. Examples of the sweet amino acid include alanine and glycine, and alanine is preferable. Examples of the high-intensity sweetener include acesulfame potassium, neotame, aspartame, sucralose and the like. These sweeteners may be used alone or in combination of two or more.

The beer-like effervescent beverage according to the present invention may be a beverage containing only a polydextrose as a water-soluble dietary fiber, or may be a beverage containing a water-soluble dietary fiber other than the polydextrose. The water soluble dietary fiber refers to a carbohydrate which is soluble in water and not or hardly digested by human digestive enzymes. By containing the water-soluble dietary fiber, a beer-like effervescent beverage having a better drink fulfillment can be obtained. Examples of the water-soluble dietary fiber other than the polydextrose to be blended to the beer-like effervescent beverage according to the present invention include an indigestible dextrin, soybean dietary fiber, galactomannan, inulin, guar gum decomposition product, pectin, gum arabic and the like. These water-soluble dietary fibers may be used alone or in combination of two or more.

The beer-like effervescent beverage according to the present invention may further contain an acidulant. By containing the acidulant, it is possible to obtain a beer-like effervescent beverage which has excellent balance of flavor and is stronger in beer-likeness. The acidulant is not particularly limited as long as it can be blended in foods and drinks, and can be appropriately determined together with the blending amount according to the quality characteristics required for the final product. The acidulant is not particularly limited as long as it is generally used for the production of foods and drinks, and examples thereof include lactic acid, citric acid, gluconic acid, malic acid, tartaric acid, fumaric acid, succinic acid, adipic acid, fumaric acid, phosphoric acid, and salts thereof. These acidulants may be used alone or in combination of two or more.

When the beer-like effervescent beverage according to the present invention contains an acid, it is preferable to adjust the amount of acid to be added so that the pH of the beverage is 3.0 to 4.0. When the amount of acid added to the beverage is too large, sourness is emphasized and it becomes hard to drink. The balance of the flavor can be further improved in a non-fermented beer-like effervescent beverage by adjusting the amount of acid added so that the pH of the beverage is about 3.0 to 4.0.

The beer-like effervescent beverage according to the present invention may further contain a bittering agent. Bitterness is one of the characteristics of beer, and the inclusion of a bittering agent makes it possible to obtain a beer-like effervescent beverage with a stronger beer-likeness. The bittering agent is not particularly limited as long as it exhibits a bitter taste which is the same as or similar to beer in a beer-like effervescent beverage which is a product, and it may be a bitter taste component contained in hops, or may be a bitter taste component not contained in hops. Specific examples of the bittering agent include a bitter taste-imparting component such as a magnesium salt, calcium salt, tributyl citrate, triethyl citrate, naringin, quassin, iso-α-acid, tetra-iso-α-acid, oxide of β-acid, quinine, momordicin, quercitrin, theobromine, caffeine or the like; bitter taste-imparting materials such as a bitter gourd, Swertia herb tea, Ku Ding tea, absinth extract, gentian root extract, redbark cinchona extract or the like. These bittering agents may be used alone or in combination of two or more.

Many beers are light yellow to dark brown or black clear solutions. The beer-like effervescent beverage according to the present invention can further contain a pigment to impart the same color as beer. Although the pigment is not particularly limited as long as it can impart a beer-like color and is edible and drinkable, a caramelization reaction product (caramel pigment) is particularly preferable.

When the beer-like effervescent beverage according to the present invention contains a pigment, the content of the pigment may be appropriately adjusted according to the type of the pigment to be used, the quality characteristics required for the final product, and the like. In the beer-like effervescent beverage according to the present invention, the pigment is preferably added so that the chromaticity of the beverage is 2° EBC or more, more preferably 5° EBC or more, even more preferably 7° EBC or more, and even more preferably 7 to 16° EBC. The chromaticity can be measured by the Analytica-EBC standard method of EBC (European Brewery Convention), or a method equivalent to it. EBC is a unit of chromaticity in analysis of beer and is a numerical value representing the shade of beer color (it is measured visually by a comparator with nine glass disks of EBC color, or calculated based on the absorbance at a wavelength of 430 nm).

The greatest feature of the beer appearance is that a beautiful white head is created when poured into a container. Therefore, the beer-like effervescent beverage according to the present invention may further contain a foaming agent. Examples of the foaming agent include a soybean dietary fiber, soybean peptide, soybean saponin, alginate, quillaja saponin and the like. These foaming agents may be used alone, or in combination of two or more. The beer-like effervescent beverage according to the present invention preferably contains one or more selected from the group consisting of a soybean peptide, soybean dietary fiber, alginate, and quillaja saponin, and more preferably contains one or more selected from the group consisting of a soybean dietary fiber and quillaja saponin.

When the beer-like effervescent beverage according to the present invention contains a foaming agent, the content of the foaming agent may be appropriately adjusted according to the type and combination of the foaming agents to be used, the quality characteristics required for the final product, and the like. In the beer-like effervescent beverage according to the present invention, the foaming agent is preferably added so that the NIBEM value of the beverage is 80 or more, more preferably 100 or more, and even more preferably 150 or more. In addition, the NIBEM value is a value obtained by measuring the disintegration rate of the poured foam by electrical conductivity, and is generally used for evaluating the foam stability of beer and the like. The NIBEM value of a non-fermented beer-like effervescent beverage can be measured by the Analytica-EBC standard method of EBC (European Brewery Convention), or a method equivalent to it.

The beer-like effervescent beverage according to the present invention may be an alcoholic beverage containing an ethanol, or may be a non-alcoholic beverage not containing an ethanol. When the beer-like effervescent beverage according to the present invention contains an ethanol, the ethanol concentration in the beverage is preferably 1 to 9% by volume, more preferably 1 to 8% by volume, and even more preferably 1 to 7% by volume. In addition, the non-fermented beer-like effervescent beverage containing an ethanol can be manufactured by using an alcohol-containing distilled liquid as a raw material. The alcohol-containing distillate is a solution containing an alcohol obtained by a distillation operation, and those generally classified into distilled liquor can be used. For example, as raw material alcohols generally used in the production of alcoholic beverages, spirits, whiskey, brandy, vodka, rum, tequila, gin, shochu and the like can be used.

The beer-like effervescent beverage according to the present invention can further contain other components as long as the effects of the present invention are not impaired. Examples of other components include protein-decomposed products derived from yeast or grains such as wheat and the like, saccharified liquid of malt, fruit juice, herbs, flavoring material and the like.

Examples of the flavoring material include a beer flavor, beer fragrance, hop fragrance, malt fragrance, carbonic acid enhancer and the like.

The beer-like effervescent beverage according to the present invention can be manufactured in the same manner as in the production of a general beer-like effervescent beverage, except that a steviol glycoside and a polydextrose are used as raw materials.

When the beer-like effervescent beverage according to the present invention is a non-fermented beer-like effervescent beverage, it can be manufactured, for example, by a manufacturing method including a preparation step of mixing a raw material containing a steviol glycoside, a polydextrose and other raw materials to prepare a preparation liquid; a gas-introduction step of adding carbon dioxide gas to the preparation liquid obtained in the preparation step; and a hydrolysis step of adding carbonated water. When using a raw material containing an α-acid such as hop or hop extract as a bittering agent, it can be manufactured by a manufacturing method including a preparation step of mixing the raw materials to prepare a preparation liquid; an isomerization step of subjecting the preparation liquid obtained in the preparation step to a boiling treatment to isomerize the α-acid; a gas-introduction step of adding carbon dioxide gas to the isomerized preparation liquid after the isomerization step; and a hydrolysis step of adding carbonated water. The boiling method and conditions thereof can be selected appropriately. In addition, the timing of mixing the flavoring material and the pigment may be simultaneous with other raw materials, or may be after the gas-introduction step or the hydrolysis step.

First, in the preparation step, the preparation liquid is prepared by mixing the raw materials. In the preparation step, it is preferable to prepare a preparation liquid in which all the raw materials other than carbon dioxide gas, flavoring material and pigment are mixed. The order of mixing the respective raw materials is not particularly limited. All the raw materials may be added simultaneously to the raw material water, or the raw materials may be added sequentially, such as adding the remaining raw materials after the previously added raw materials have been dissolved. In addition, for example, the raw material water may be mixed with a solid (for example, powder or granular) raw material and alcohol, or the solid raw material may be previously made into an aqueous solution, and the aqueous solution and an alcohol are mixed with raw the material water according to need.

When insoluble matter is generated in the preparation liquid prepared in the preparation step, it is preferable to perform a process for removing the insoluble matter such as filtration treatment to the preparation liquid in any step. In particular, in the case of carrying out the isomerization step, it is preferable to remove the insoluble matter from the preparation liquid after the isomerization treatment. The insoluble matter removal treatment is not particularly limited, and can be carried out by methods commonly used in the relevant technical field such as filtration method and centrifugation method. In the present invention, the insoluble matter is preferably removed by filtration, and more preferably removed by diatomaceous earth filtration.

Subsequently, carbon dioxide gas is added to the preparation liquid obtained in the preparation step as a gas-introduction process. By carrying out this step, a non-fermented beer-like effervescent beverage can be obtained. By adding carbon dioxide gas, the same refreshing feeling as beer can be provided. The addition of carbon dioxide gas can be performed by a conventional method. For example, the preparation liquid obtained in the preparation step may be mixed with carbonated water, or carbon dioxide gas may be directly added to and dissolved in the preparation liquid obtained in the preparation step.

After carbon dioxide gas is added, the obtained non-fermented beer-like effervescent beverage may be further subjected to a treatment for removing the insoluble matter such as filtration treatment. The insoluble matter-removing process is not particularly limited, and can be performed by a method commonly used in the relevant technical field.

The obtained non-fermented beer-like effervescent beverage is usually filled into a container such as a can, bottle, plastic bottle or the like by a filling process and shipped as a product.

When the beer-like effervescent beverage according to the present invention is a fermented beer-like effervescent beverage, it can be manufactured, for example, by carrying out steps of preparation (preparation of fermentation raw material liquid), fermentation, storage, and filtration. The timing and amount of the addition of the raw material containing steviol glycoside as the raw material and the polydextrose may be appropriately adjusted so as to be within the desired concentration range in the finally obtained beverage. The raw material containing steviol glycoside and the polydextrose may be added, for example, simultaneously with the fermentation raw material or the like in the preparation step, or to the fermentation liquid after the fermentation step.

First, as a preparation step (fermentation raw material liquid preparation step), a mixture containing a fermentation raw material and water is subjected to a saccharification treatment, and the obtained saccharified liquid is subjected to a boiling treatment. Specifically, first, a mixture containing a fermentation raw material and a raw material water is prepared and heated to saccharify the starch of the fermentation raw material. As the fermentation raw material, only grain raw materials may be used, or only carbohydrate raw materials may be used, or both may be mixed and used.

Examples of the grain raw material include wheat kinds such as a barley, wheat, and malts thereof, rice, corn, beans such as soybeans, potatoes and the like. As the grain raw material, a grain syrup, a grain extract or the like can be used, and a grain pulverized product obtained by a grinding process is preferable. The grinding process of the grains can be carried out by a conventional method. The grain pulverized product may be a pulverized malt, corn starch, corn grits or the like, which has been subjected to a treatment which is usually carried out before or after the grinding treatment. In addition, the pulverized malt may be obtained by germinating barley such as two-rowed barley according to a conventional method, followed by drying and pulverizing it to a predetermined particle size. In addition, the grain raw material used in the present invention may be used alone, or in combination of plural kinds thereof. For example, the pulverized malt may be used as a main raw material and pulverized rice or corn may be used as an auxiliary raw material. Examples of the carbohydrate raw material include sugars such as liquid sugar.

The saccharification treatment is carried out by using enzymes derived from the grain raw material or the like, or by using enzymes separately added. The temperature at the time of saccharification treatment and the time may be appropriately adjusted according to the type of the grain raw material, the ratio of the grain raw material to the whole fermented raw material, the type of the enzyme, the amount of the mixture, the quality of the intended fermented beer-like effervescent beverage and the like. For example, the saccharification treatment can be carried out by a conventional method such as holding a mixture containing grain raw materials and the like at 35 to 70 °C for 20 to 90 minutes. Further, it is preferable to add a saccharifying enzyme such as α-amylase, glucoamylase and pullulanase or the like, or an enzyme agent such as protease or the like.

A broth (boiled product of saccharified liquid) can be prepared by boiling the saccharified liquid obtained after the saccharification treatment. It is preferable to filter the saccharified liquid prior to the boiling treatment and then boil the obtained filtrate. In addition, instead of the filtrate of the saccharified liquid, a solution obtained by adding hot water to a malt extract may be used to boil. The boiling method and its conditions can be appropriately adjusted.

A fermented beer-like effervescent beverage having a desired flavor can be produced by suitably adding herbs and the like prior to the boiling treatment or during the boiling treatment. Particularly, hops are preferably added prior to the boiling treatment or during the boiling treatment. By the boiling treatment in the presence of hops, flavor/aroma components of the hops can be efficiently extracted. The addition amount of the hops, the addition mode (for example, addition in several portions) and the boiling conditions can be appropriately adjusted.

The broth (boiled saccharified liquid) obtained in the preparation step contains residues such as proteins generated by precipitation. For this reason, it is preferable to remove at least a part of the solid content from the broth as a solid-liquid separation step before the fermentation step. The solid-liquid separation step for removing the solid content is generally performed by removing the precipitate using a tank called a whirlpool. The temperature of the broth at this time may be set to 15 °C or higher, and generally, it is carried out at about 50 to 100 °C. After removing the residues, the broth (filtrate) is cooled to an appropriate fermentation temperature by a plate cooler or the like. The broth after removing the residues may be used as a fermentation raw material solution as it is, or a solution obtained by adjusting the broth after removal to a desired extract concentration may be used as a fermentation raw material solution.

Next, as the fermentation step, fermentation may be carried out by inoculating yeasts into the fermentation raw material solution. The yeasts used for fermentation are not particularly limited, and can be appropriately selected from the yeasts usually used for producing alcoholic beverages. Although the yeasts may be a high fermentation yeast or a low fermentation yeast, a low fermentation yeast is preferable because it is easy to apply to a large brewing facility.

Further, an intended fermented beer-like effervescent beverage can be obtained through a sake-storage step in which the obtained fermented solution is aged in a storage tank and stored at a low temperature condition of about 0 °C for stabilization, and a subsequent filtration step in which the fermented solution after aged is filtrated to remove yeast, proteins insoluble in the temperature range and the like. The filtration step may be any method with which yeast can be filtrated and removed, for example, diatomaceous earth filtration, filter filtration using a filter having an average pore diameter of 0.4 to 0.6 µm. Further, an appropriate amount of water may be added for dilution before or after the filtration to that the beverage may have a desired alcohol concentration. The obtained fermented beer-like effervescent beverage is usually bottled in a filling process and shipped as a product.

In addition, a fermented beer-like effervescent beverage corresponding to a liqueur in the liquor tax law can be manufactured in the steps after the fermentation step with yeast by mixing with an alcohol-containing distillate. The alcohol-containing distillate may be added either before or after water addition for alcohol concentration adjustment. The alcohol-containing distillate to be added is preferably wheat spirits because a fermented beer-like effervescent beverage having a more preferable wheat-like flavor can be obtained.

### [EXAMPLES]

The present invention will be described in more detail using examples and reference examples, which should not be construed as limiting the invention thereto.

### [Reference Example 1]

A steviol glycoside was added to a non-fermented beer-like effervescent beverage, and the influence on taste was examined. An enzyme-treated stevia was used as the steviol glycoside.

### <Manufacture of non-fermented beer-like effervescent beverage>

First, a Herkules species hop extract (product name: "CO₂ Hop Extract", manufactured by Barth-Haas Group) was subjected to a boiling treatment to prepare a raw material.

A base beverage was obtained by blending the boiled hop extract with the raw material water so that the iso-α-acid content of the beverage was 0.02 g/L, blending a caramel pigment so that the final concentration of the caramel pigment in the beverage was 0.3 g/L, blending a phosphoric acid so that the final concentration the phosphoric acid in the beverage was 0.50 g/L, blending a sodium citrate so that the final concentration of the sodium citrate in the beverage was 0.35 g/L, and blending a beer flavoring material so that the final concentration of the beer flavoring material in the beverage was 0.8 g/L.

Non-fermented beer-like effervescent beverages were prepared by blending the base beverage with an enzyme-treated stevia (trade name: "SK Sweet FZ", main components: stevioside and its enzyme-treated product (85% or more)) so that the final concentrations in the beverages were as shown in Table 1.

Specifically, all the raw materials were mixed with the raw material water to prepare a mixed solution (primary raw material liquid) adjusted to 1 L. Then, a non-fermented beer-like effervescent beverage was obtained by blowing carbon dioxide gas into the clarified primary raw material liquid to dissolve the carbon dioxide gas so that the carbon dioxide concentration was 2.9 gas volume.

### <Sensory evaluation>

A sensory evaluation of the non-fermented beer-like effervescent beverage was conducted on a five-level scale by five beer expert panelists, in which the sweetness, astringency and beer-likeness of the control sample (base beverage) was defined as 3 points, the feeling stronger than that was defined as 5 points, and the feeling weaker than that was defined as 1 point. Beer-likeness was determined by whether or not it was close to beer comprehensively. When there was a difference of 0.5 points or more compared to the control sample, the beverage was evaluated as better than the control sample (with improvement effect), and when there was a difference of 1 point or more, the beverage was evaluated as significantly better than the control (with significant effect).

The results of the sensory evaluation of each non-fermented beer-like effervescent beverage are shown in Table 1 together with the amount (mg/L) of the enzyme-treated stevia. In the comment column, the numerical values in parentheses indicate the number of panelists who made the comments. As a result, in sample 1-2 in which the blending amount of the enzyme-treated stevia was 15 mg/L (the content of stevioside and its enzyme-treated product was in a range of 12.75 to 15 mg/L), sample 1-3 in which the blending amount of the enzyme-treated stevia was 30 mg/L (the content of stevioside and its enzyme-treated product was in a range of 25.5-30 mg/L), sample 1-4 in which the blending amount of the enzyme-treated stevia was 50 mg/L (the content of stevioside and its enzyme-treated product was in a range of 42.5 to 50 mg/L), and sample 1-5 in which the amount of enzyme-treated stevia was 80 mg/L (the content of stevioside and its enzyme-treated product was in a range of 68 to 80 mg/L), the astringency was stronger than that of the base beverage (control sample) and the beer-likeness was improved. On the other hand, in the non-fermented beer-like effervescent beverage of sample 1-6 in which the blending amount of the enzyme-treated Stevia was 120 mg/L, although the astringency was sufficient, the sweetness was strongly felt as a different taste, and the beer likeness was lower than that of the control sample.

**[Table 1]**

| Sample | Base beverage (Control) | 1-1 | 1-2 | 1-3 | 1-4 | 1-5 | 1-6 |
|---|---|---|---|---|---|---|---|
| Enzyme-treated stevia [mg/L] | 0 | 5 | 15 | 30 | 50 | 80 | 120 |
| Sweetness | 3 | 3.0 | 3.0 | 3.2 | 3.6 | 4.0 | 5.0 |
| Astringency | 3 | 3.2 | 3.8 | 4.0 | 4.0 | 4.2 | 4.2 |
| Beer-likeness | 3 | 3.2 | 4.0 | 4.4 | 4.2 | 3.8 | 2.6 |
| Comments | Sour taste, watery | Sour taste, watery (2) | Astringency (2), drink fulfillment | Astringency (2), rich taste, drink fulfillment | Astringency, after taste (2), rich taste, drink fulfillment (3) | Sweetness (3), mild, astringency | Sweetness (5), Astringency (2) |

### [Reference Example 2]

A steviol glycoside, acesulfame potassium, or sucralose was added to the non-fermented beer-like effervescent beverage, and influence on the taste was examined. As the steviol glycoside, the same enzyme-treated stevia as in Reference Example 1 was used. The concentration of the high-intensity sweetener blended was adjusted so that the sweetness degree was the same.

Specifically, the non-fermented beer-like effervescent beverage was manufactured in the same manner as in Reference Example 1 except that an enzyme-treated stevia (sweetness degree 180), acesulfame potassium (sweetness degree 200, San-Ei Gen F.F.I., Inc.) and sucralose (sweetness degree 600, San-Ei Gen F.F.I., Inc.) were blended in the base beverage used in Reference Example 1 so that the final concentrations in the beverage were as shown in Table 2.

A sensory evaluation of each of the non-fermented beer-like effervescent beverages manufactured was conducted in the same manner as in Reference Example 1 except that sample 2-1 containing an enzyme-treated stevia was used as a control sample, and the results are shown in Table 2 along with the amounts of the high-intensity sweeteners (mg/L). As a result, in the non-fermented beer-like effervescent beverage of sample 2-2 blended with the acesulfame potassium and sample 2-3 blended with the sucralose, a disagreeable sweetness was felt, the beer-likeness was reduced, and the astringency was also reduced despite the sweetness degree being the same as sample 2-1 in which an enzyme-treated stevia was blended. It is presumed that since the sweetness-expression of the steviol glycosides is slower than acesulfame potassium and sucralose, it competes with the characteristic bitter taste of beer derived from isomerized hop extract, thereby contributing to the rise of drink fulfillment and beer-likeness without feeling disagreeable sweetness.

**[Table 2]**

| Sample | 2-1 (Control) | 2-2 | 2-3 |
|---|---|---|---|
| High-intensity sweetener | Enzyme-treated stevia [30 mg/L] | Acesulfame potassium [27 mg/L] | Sucrose [9 mg/L] |
| Sweetness | 3 | 4.2 | 3.6 |
| Astringency | 3 | 2.0 | 2.4 |
| Beer-likeness | 3 | 1.8 | 1.4 |
| Comments | Balance, drink fulfillment | Sweetness (4), Early sweetness | Flat (2), later sweetness |

### Example 1

Polydextrose was further blended to a beer-like effervescent beverage blended with steviol glycosides, and the influence on the taste was examined. As the steviol glycoside, the same enzyme-treated stevia as in Reference Example 1 was blended in the same amount (30 mg/L) as in sample 1-3 in which the evaluation of beer-likeness was the highest in Reference Example 1.

Specifically, non-fermented beer-like effervescent beverages were prepared in the same manner as in Reference Example 1 except that an enzyme-treated stevia and a polydextrose agent (product name: "Lites HF", dietary fiber purity: 95%, manufactured by Danisco) were each blended in the base beverage used in Reference Example 1 so that the final concentrations in the beverage was as described in Table 3. In the row of "polydextrose concentration [g/L]" of Table 3, the upper row shows the concentration of the polydextrose agent blended in the beverage, and the lower row shows the concentration of the polydextrose actually blended in the beverage.

A sensory evaluation was conducted on each of the non-fermented beer-like effervescent beverages manufactured in the same manner as in Reference Example 1 except that sample 3-1 containing only enzyme-treated stevia was used as a control sample, and the results are shown in Table 3. As shown in Table 3, in the non-fermented beer-like effervescent beverages of sample 3-3 to sample 3-6 in which the blending amount of polydextrose was 4.75 g/L or more, the bitterness and sweetness were not similar to those of sample 3-1. Although it was not so different from the fermented beer-like effervescent beverage, the beer-likeness was improved, and further, it was found from the comments of the panelists that it was mild. In particular, in samples 3-3 to 3-5 in which the blending amount of polydextrose was 4.75 to 19 g/L, the beer-likeness was significantly improved. From these results, it was confirmed that the combination use of steviol glycoside and polydextrose can improve the beer-likeness.

**[Table 3]**

| Sample | 3-1 (Control) | 3-2 | 3-3 | 3-4 | 3-5 | 3-6 |
|---|---|---|---|---|---|---|
| Enzyme-treated stevia [mg/L] | 30 | 30 | 30 | 30 | 30 | 30 |
| Polydextrose concentration [g/L] | 0 | 1 | 5 | 10 | 20 | 40 |
| | 0 | 0.95 | 4.75 | 9.5 | 19 | 38 |
| Sweetness | 3 | 3.0 | 3.0 | 3.0 | 3.2 | 3.2 |
| Astringency | 3 | 3.2 | 3.2 | 2.8 | 2.8 | 2.8 |
| Beer-likeness | 3 | 2.8 | 4.0 | 4.4 | 4.2 | 3.6 |
| Comments | Scratchy sensation (2), tingling sensation | Astringency (2) | Mild (2), drink fulfillment, good astringency | Mild (2), drink fulfillment, good astringency (2) | Mild (2), good astringency | Mild (2), flat (2) |

Therefore, each sample was further subjected to a sensory evaluation for mildness. Here, "mild" is an opposite term of irritative, and indicates a smooth and well-balanced taste. Specifically, those with mildness higher than the control sample (sample 3-1) were evaluated as "A", those with mildness similar to the control sample were evaluated as "B", and those with mildness lower than the control sample (= with irritation) were evaluated as "C". Table 4 shows the number of panelists who evaluated each of the samples.

**[Table 4]**

| Sample | 3-1 (Control) | 3-2 | 3-3 | 3-4 | 3-5 | 3-6 |
|---|---|---|---|---|---|---|
| Mildness A [number] | - | 1 | 3 | 5 | 5 | 5 |
| Mildness B [number] | - | 3 | 2 | 0 | 0 | 0 |
| Mildness C [number] | - | 1 | 0 | 0 | 0 | 0 |

As shown in Table 4, in the non-fermented beer-like effervescent beverages of sample 3-3 to sample 3-6 in which the blending amount of the polydextrose was 4.75 g/L or more, more than half of the panelists evaluated as "mild". From the results, it can be inferred that the reason why the beer-likeness of samples 3-3 to sample 3-6 was improved as compared to sample 3-1 in which only the enzyme-treated stevia was added was because irritation was reduced by the polydextrose and the flavor was coordinated, thereby coordinating the beer-likeness. In particular, it is surmised that the quality of the astringency derived from the steviol glucoside was improved by the polydextrose to impart a suitable astringency derived from the astringency, thereby leading to the improvement of beer-likeness. On the other hand, although the mildness was improved in sample 3-6 in which the blending amount of polydextrose was 38 g/L, the beer-likeness was lowered. Therefore, if it becomes too mild, the taste tends to be flat and undesirable.

### Example 2

It was investigated whether the improvement effect of the beer-likeness by using steviol glycoside and polydextrose in combination could be obtained also by using steviol glycoside and other water-soluble dietary fibers in combination. As the steviol glycoside, the same enzyme-treated stevia as in Reference Example 1 was blended in the same amount (30 mg/L) as in sample 1-3 in which the evaluation of beer-likeness was the highest in Reference Example 1.

Specifically, a non-fermented beer-like effervescent beverage was manufactured in the same manner as in Reference Example 1 except that an enzyme-treated stevia and a polydextrose agent (product name: "Lites HF", dietary fiber purity: 95%, manufactured by Danisco) or indigestible dextrin agent (product name: "E fiber", dietary fiber purity: 90%, manufactured by Matsutani Chemical Co., Ltd.) was added to the base beverage used in Reference Example 1 so that the final concentration of the water-soluble dietary fiber in the beverage was 9.5 g/L.

A sensory evaluation of the beer-likeness of each of the manufactured non-fermented beer-like effervescent beverages was conducted in the same manner as in Reference Example 1 except that sample 4-1 containing the enzyme-treated stevia was used as a control sample. Further, the sensory evaluation of mildness of each of the manufactured non-fermented beer-like effervescent beverages was conducted in the same manner as in Reference Example 1 except that sample 4-1 containing the enzyme-treated stevia was used as a control sample. The results are shown in Table 5. As shown in Table 5, in the non-fermented beer-like effervescent beverage of sample 4-2 blended with the indigestible dextrin, unlike the non-fermented beer-like effervescent beverage blended with polydextrose in sample 4-3, no improvement in mildness and beer-likeness was observed. From these results, it was confirmed that the improvement effect of the beer-likeness by using the steviol glycoside in combination was an effect unique to the case of blending the polydextrose among the water-soluble dietary fibers.

**[Table 5]**

| sample | 4-1 (Control) | 4-2 | 4-3 |
|---|---|---|---|
| Enzyme-treated stevia [mg/L] | 30 | 30 | 30 |
| Polydextrose concentration [g/L] | - | - | 9.5 |
| Indigestible dextrin concentration [g/L] | - | 9.5 | - |
| Mildness A [number] | - | 1 | 5 |
| Mildness B [number] | - | 4 | 0 |
| Mildness C [number] | - | 0 | 0 |
| Beer-likeness [number] | 3 | 3.2 | 4.0 |
| Comments | | Sharp (2), scratchy sensation | Puffy, mild, smooth (2) |

## Claims

1. A beer-like effervescent beverage, comprising 10 to 80 mg/L of a steviol glycoside and 4 to 40 g/L of a polydextrose.

2. The beer-like effervescent beverage according to Claim 1, wherein the beer-like effervescent beverage is a non-fermented beverage.

3. The beer-like effervescent beverage according to Claim 1 or 2, wherein the steviol glycoside is at least one selected from the group consisting of a stevioside, a rebaudioside A, and a glycosyltransferase-treated product thereof.

4. The beer-like effervescent beverage according to any one of Claims 1 to3, wherein an alcohol content is less than 1.0%.

## Patentansprüche

1. Ein bierähnliches, sprudelndes Getränk, umfassend 10 bis 80 mg/L eines Steviol-Glykosids und 4 bis 40 g/L Polydextrose.

2. Das bierähnliche, sprudelnde Getränk nach Anspruch 1, wobei das bierähnliche, sprudelnde Getränk ein nicht fermentiertes Getränk ist.

3. Das bierähnliche, sprudelnde Getränk nach Anspruch 1 oder 2, wobei das Steviol-Glykosid mindestens eines der folgenden ist: Steviosid, Rebaudiosid A oder ein durch Glycosyltransferase behandeltes Produkt davon.

4. Das bierähnliche, sprudelnde Getränk nach einem der Ansprüche 1 bis 3, wobei der Alkoholgehalt weniger als 1,0 % beträgt.

## Revendications

1. Une boisson effervescente de type bière, comprenant 10 à 80 mg/L d'un glycoside de stéviol et 4 à 40 g/L de polydextrose.

2. La boisson effervescente de type bière selon la revendication 1, dans laquelle la boisson effervescente de type bière est une boisson non fermentée.

3. La boisson effervescente de type bière selon la revendication 1 ou 2, dans laquelle le glycoside de stéviol est au moins un composé sélectionné dans le groupe constitué d'un stévioside, d'un rebaudioside A et d'un produit traité par glycosyltransférase dérivé de ceux-ci.

4. La boisson effervescente de type bière selon l'une quelconque des revendications 1 à 3, dans laquelle la teneur en alcool est inférieure à 1,0 %.
